(19) Europäisches Patentamt
European Patent Office
Office européen des brevets

(11) **EP 2 108 139 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(21) Anmeldenummer: **07857883.8**

(22) Anmeldetag: **19.12.2007**

(51) Int Cl.:
*G05B 13/02* *(2006.01)*     *G05B 17/02* *(2006.01)*

(86) Internationale Anmeldenummer:
**PCT/EP2007/064262**

(87) Internationale Veröffentlichungsnummer:
**WO 2008/080862 (10.07.2008 Gazette 2008/28)**

(54) **VERFAHREN ZUR RECHNERGESTÜTZTEN REGELUNG UND/ODER STEUERUNG EINES TECHNISCHEN SYSTEMS, INSBESONDERE EINER GASTURBINE**

METHOD FOR THE COMPUTER-AIDED CONTROL AND/OR REGULATION OF A TECHNICAL SYSTEM, PARTICULARLY A GAS TURBINE

PROCÉDÉ DE RÉGULATION ET/OU DE CONTRÔLE ASSISTÉ PAR ORDINATEUR D'UN SYSTÈME TECHNIQUE, EN PARTICULIER D'UNE TURBINE À GAZ

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.01.2007 DE 102007001024**

(43) Veröffentlichungstag der Anmeldung:
**14.10.2009 Patentblatt 2009/42**

(73) Patentinhaber: **Siemens Aktiengesellschaft 80333 München (DE)**

(72) Erfinder:
• **STERZING, Volkmar 85579 Neubiberg (DE)**
• **UDLUFT, Steffen 82223 Eichenau (DE)**

(56) Entgegenhaltungen:
**EP-A- 1 016 981     US-A- 5 485 545**

• **CHENG L ET AL: "A comparison of optimal control and stochastic programming from a formulation and computation perspective" COMPUTERS & CHEMICAL ENGINEERING, PERGAMON PRESS, OXFORD, GB, Bd. 29, Nr. 1, 15. Dezember 2004 (2004-12-15), Seiten 149-164, XP004668641 ISSN: 0098-1354**

**Beschreibung**

Die Erfindung betrifft ein Verfahren zur rechnergestützten Regelung und/oder Steuerung eines technischen Systems, insbesondere einer Gasturbine, sowie ein entsprechendes Computerprogrammprodukt.

Bei der Steuerung von komplexen technischen Systemen ist es oftmals wünschenswert, dass am technischen System durchzuführende Veränderungen derart gewählt sind, dass ein vorteilhaftes gewünschtes dynamisches Verhalten des technischen Systems erhalten wird. Das dynamische Verhalten kann jedoch bei komplexen technischen Systemen oftmals nicht einfach vorhergesagt werden, so dass entsprechende rechnergestützte Vorhersageverfahren benötigt werden, um das zukünftige Verhalten des technischen Systems abzuschätzen und dementsprechend geeignete Aktionen zur Regelung bzw. zur Steuerung des technischen Systems zu wählen.

Oftmals sind die Zustände eines technischen Systems nicht einfach messbar und lassen sich aufgrund stochastischer Anteile des Systemverhaltens nur statistisch beschreiben. Bei der Regelung solcher technischen Systeme existieren somit oftmals keine Sollwerte bzw. Führungsgrößen für eine entsprechende Regelung sowie auch keine entsprechenden Zielgrößen, auf deren Abbildung ein entsprechendes Simulationsmodell, wie z.B. ein neuronales Netz, trainiert werden kann. Da mögliche Abhängigkeiten zwischen verschiedenen Messgrößen und Stellgrößen von komplexen technischen Systemen oftmals unklar sind, ist es nur schwer bzw. durch extrem lange Beobachtung des dynamischen Verhaltens des technischen Systems möglich, eine optimale automatische Regelung für dieses System zu entwickeln.

Aus dem Stand der Technik sind verschiedene Verfahren zur Regelung bzw. Steuerung und zur Optimierung von Arbeitspunkten technischer Systeme bekannt. Diese Verfahren nutzen entweder ein analytisches Modell zur Beschreibung des technischen Systems oder sie beruhen auf vergangenen Messdaten des technischen Systems bzw. auf einer Modellierung des technischen Systems basierend auf Kenntnissen über das System, wobei die Modellierung beispielsweise mit Hilfe von Bayes-Netzen bzw. Neuro-Fuzzy-Netzen erfolgt.

Die bekannten Verfahren zur Regelung bzw. Steuerung eines technischen Systems weisen den Nachteil auf, dass die Verfahren zur Modellierung des technischen Systems oftmals eine Vielzahl von Messdaten benötigen und auch vorab nicht klar ist, ob die Verfahren für das speziell verwendete technische System geeignet sind.

Die Druckschrift EP 1 016 981 A1 zeigt eine Vorrichtung zum Lernen eines Agenten, wobei mit einer Vielzahl von auf bestärkendem Lernen basierenden Lernmodulen an einem technischen System durchzuführende Aktionen gelernt werden. In Abhängigkeit von ermittelten Prädiktionsfehlern werden die Aktionen der einzelnen Lernmodule entsprechend gewichtet und miteinander kombiniert.

Aus dem Dokument US 5 485 545 A ist ein Verfahren zur Steuerung eines technischen Systems bekannt, bei dem die Steuerung basierend auf rekurrenten neuronalen Netzen gelernt wird. Als Anwendungsfall ist die Steuerung der Spannung eines Stromversorgungssystems beschrieben.

Aufgabe der Erfindung ist es, ein Verfahren zur rechnergestützten Regelung und/oder Steuerung eines technischen Systems zu schaffen, welches anhand von wenigen Messdaten eine effektive und genaue Regelung bzw. Steuerung des technischen Systems ermöglicht.

Diese Aufgabe wird durch die unabhängigen Patentansprüche gelöst. Weiterbildungen der Erfindung sind in den abhängigen Ansprüchen definiert.

In dem erfindungsgemäßen Verfahren wird in Schritt a) ein Simulationsmodell des technischen Systems auf der Basis von gemessenen, zeitlich aufeinander folgenden Zuständen des technischen Systems erstellt. Anschließend wird in Schritt b) auf das erstellte Simulationsmodell eine Mehrzahl von Lern- und/oder Optimierungsverfahren angewendet, wobei die Lern- und/oder Optimierungsverfahren als Ergebnis jeweils gelernte Parameter und eine Folge von Zuständen und den Zuständen zugeordneten Aktionen liefern und eine einem Zustand zugeordnete Aktion zu einem neuen Zustand in der Folge von Zuständen und Aktionen führt. Anhand der Ergebnisse der Mehrzahl von Lern- und/oder Optimierungsverfahren wird schließlich in Schritt c) nach vorgegebenen Kriterien ein Lern- und/oder Optimierungsverfahren aus der Mehrzahl der Lern- und/oder Optimierungsverfahren ausgewählt, wobei das ausgewählte Verfahren gemäß dieser vorgegebenen Kriterien für die Regelung und/oder Steuerung des technischen Systems geeignet ist. Die Auswahl des Lern- bzw. Optimierungsverfahrens in Schritt c) erfolgt dabei in Abhängigkeit von einer Bewertung, welche von dem Simulationsmodell ausgegeben wird und/oder welche von dem Ergebnis des jeweiligen Lern- bzw. Optimierungsverfahrens abhängt. Schließlich wird das technische System in Schritt d) mit dem ausgewählten Lern- und/oder Optimierungsverfahren geregelt bzw. gesteuert, wobei die Regelung bzw. Steuerung in Abhängigkeit von einem Zustand des technischen Systems die nachfolgend am technischen System durchzuführende Aktion angibt.

Mit dem erfindungsgemäßen Verfahren kann bereits anhand von wenigen Messdaten ein Simulationsmodell erstellt werden, mit dem dann ermittelt wird, welches Lern- bzw. Optimierungsverfahren besonders zur Steuerung bzw. Regelung des Systems geeignet ist. Das Lern- bzw. Optimierungsverfahren wird somit nicht unmittelbar am tatsächlichen technischen System, sondern vorab an einem Simulationsmodell ausgewählt und gelernt. Auf diese Weise wird gewährleistet, dass vor der eigentlichen Regelung bzw. Steuerung des tatsächlichen technischen Systems ein besonders geeignetes Lernverfahren extrahiert wird. Somit werden Fehler bei der tatsächlichen oft sehr aufwändigen Regelung bzw. Steuerung des technischen Systems vermieden. Das Verfahren ist hierbei sehr flexibel und kann insbesondere auf einfache Weise durch neuartige Lern- bzw. Optimierungsverfahren, welche in Schritt b) des Verfahrens berücksichtigt werden, ergänzt werden. Die Erfinder konnten durch entsprechende Experimente auch nachweisen, dass sich das Verfahren sehr gut zur Regelung bzw. Steuerung einer Gasturbine eignet.

Das erfindungsgemäße Verfahren kann hierbei in Schritt d) unterschiedliche Arten der Regelung bzw. Steuerung verwenden. Diese unterschiedlichen Arten von Regelung bzw. Steuerung können auch miteinander kombiniert werden. Insbesondere kann von einer Regelungsart auf eine andere gewechselt werden. In einer Ausführungsform wird das technische System in Schritt d) mit dem ausgewählten Lernverfahren auf der Basis der in Schritt b) gelernten Parameter geregelt bzw. gesteuert, wobei die gelernten Parameter bei der Regelung bzw. Steuerung des technischen Systems nicht verändert werden. Auf diese Weise wird ein initialer Regler geschaffen, der während der gesamten Regelung bzw. Steuerung am tatsächlichen technischen System nicht verändert wird. Es handelt sich somit um einen fertig gelernten Regler, der geringe Anforderungen an den Speicherbedarf bzw. an die Rechenleistung des rechnergestützten Verfahrens während der Regelung bzw. Steuerung stellt.

In einer Variante des erfindungsgemäßen Verfahrens wird das technische System in Schritt d) mit dem ausgewählten Lernverfahren derart geregelt bzw. gesteuert, dass zu Beginn der Regelung bzw. Steuerung die in Schritt b) gelernten Parameter verwendet werden, welche während der Regelung bzw. Steuerung die Hilfe der sich bei der Regelung bzw. Steuerung ergebenden neuen Zustände und Aktionen weiter gelernt werden. Auf diese Weise wird ein adaptiver Regler geschaffen, der sich während der Regelung bzw. Steuerung im tatsächlichen Betrieb des technischen Systems kontinuierlich verbessert.

In einer weiteren Variante der Erfindung ist es auch möglich, dass die mit dem Lern- bzw. Optimierungsverfahren in Schritt b) gelernten Parameter zurückgesetzt werden (d.h. auf einen vorbestimmten vorgegebenen Wert gesetzt werden) und bei der Regelung bzw. Steuerung des technischen Systems neu gelernt werden.

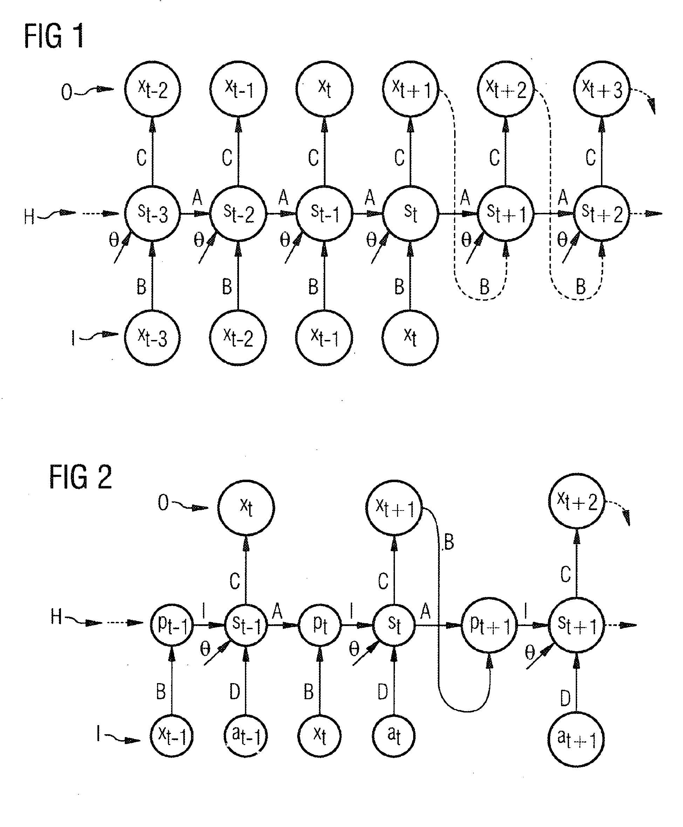

In Schritt a) des erfindungsgemäßen Verfahrens kann das Simulationsmodell auf beliebige Art und Weise erstellt werden, vorzugsweise wird hierzu ein rekurrentes neuronales Netz verwendet, wie es bspw. in der detaillierten Beschreibung mit Bezug auf Fig. 1 beschrieben ist.

Die in dem erfindungsgemäßen Verfahren verwendete Bewertung zur Auswahl des Lern- und/oder Optimierungsverfahrens ist vorzugsweise ein Maß für die Güte des Lernverfahrens in Bezug auf eine Bewertungs- oder Belohnungsfunktion. D.h., je höher die Belohnung gemäß einer Belohnungsfunktion bei der Anwendung des jeweiligen Lern- bzw. Optimierungsverfahrens auf das Simulationsmodell ist, desto besser wird die Eignung des Lern- bzw. Optimierungsverfahrens zur Regelung des technischen Systems eingestuft.

Die Mehrzahl der auf das Simulationsmodell angewendeten Lern- bzw. Optimierungsverfahren umfassen insbesondere ein oder mehrere bestärkende Lernverfahren (Reinforcement-Learning, siehe auch Dokument [2]), insbesondere tabellenbasierte bestärkende Lernverfahren. Bspw. können die Lern- und/oder Optimierungsverfahren einen adaptiven heuristischen Kritik-Algorithmus und/oder einen Q-Learning-Algorithmus und/oder einen Prioritized-Sweeeping-Algorithmus umfassen. Diese Algorithmen sind hinlänglich aus dem Stand der Technik bekannt und werden deshalb an dieser Stelle nicht mehr erläutert.

In einer weiteren, besonders bevorzugten Ausführungsform der Erfindung kann auch ein neuartiges Lernverfahren in der Mehrzahl der Lern- bzw. Optimierungsverfahren enthalten sein. Dieses Lernverfahren ist derart ausgestaltet, dass:

- das dynamische Verhalten des technischen Systems mit einem rekurrenten neuronalen Netz mit Hilfe von Trainingsdaten umfassend mit dem Simulationsmodell ermittelte Zustände und Aktionen zu mehreren Zeitpunkten modelliert wird, wobei das rekurrente neuronale Netz gebildet ist durch wenigstens eine Eingangsschicht umfassend die Zustände des technischen Systems und die am technischen System durchgeführten Aktionen zu den mehreren Zeitpunkten, wenigstens eine versteckte rekurrente Schicht umfassend versteckte Zustände und wenigstens eine Ausgangsschicht umfassend die Zustände des technischen Systems zu den mehreren Zeitpunkten;
- eine Aktionsauswahlregel gelernt wird, indem das rekurrente neuronale Netz für einen aktuellen und zukünftige Zeitpunkte mit einem weiteren neuronalen Netz umfassend wenigstens eine Eingangsschicht, wenigstens eine versteckte Schicht umfassend versteckte Zustände und wenigstens eine Ausgangsschicht gekoppelt wird, wobei die Eingangsschicht des weiteren neuronalen Netzes zu einem jeweiligen Zeitpunkt wenigstens einen Teil der versteckten Zustände des rekurrenten neuronalen Netzes zu dem jeweiligen Zeitpunkt umfasst und die Ausgangsschicht des weiteren neuronalen Netzes zu dem jeweiligen Zeitpunkt die am technischen System durchgeführte Aktion zu dem jeweiligen Zeitpunkt umfasst;
- Zustände des technischen Systems und zugeordnete Aktionen durch das mit dem weiteren neuronalen Netz gekoppelte rekurrente neuronale Netz mit gelernter Aktionsauswahlregel bestimmt werden.

Dieses neuartige Lernverfahren zeichnet sich durch zwei Schritte aus, nämlich dem Lernen der Dynamik eines technischen Systems mit Hilfe von historischen Daten auf der Basis eines rekurrenten neuronalen Netzes und dem anschließenden Lernen einer optimalen Regelung durch Kopplung des rekurrenten neuronalen Netzes mit einem weiteren neuronalen Netz.

In dem erfindungsgemäßen Verfahren ist ein Zustand des technischen Systems meistens hochdimensional, d.h. er wird durch eine Mehrzahl von Zustandsvariablen in einem ersten Zustandsraum mit einer ersten Dimension charakterisiert. Vorzugsweise sind auch die den Zuständen des technischen Systems zugeordneten Aktionen jeweils durch eine Mehrzahl von Aktionsvariablen charakterisiert.

In einer weiteren, besonders bevorzugten Ausführungsform ist eine jeweilige, einem Zustand zugeordnete Aktion durch die Veränderung von einer oder mehreren Stellgrößen des technischen Systems charakterisiert. Stellgrößen sind dabei Einstellparameter während der Regelung des technischen Systems, wobei die Stellgrößen vorzugsweise auch Zustandsvariablen des technischen Systems entsprechen können. Die Veränderung eines Zustands kann somit gegebenenfalls auch der Veränderung einer Stellgröße entsprechen.

In einer bevorzugten Variante der Erfindung wird vor der Durchführung des Schrittes b) für zumindest einen Teil der Lern- bzw. Optimierungsverfahren aus der Mehrzahl der Lern- bzw. Optimierungsverfahren eine Minimierung des ersten Zustandsraums der Zustände durchgeführt, was den Vorteil hat, dass auch Lernverfahren eingesetzt werden können, welche üblicherweise nur auf niederdimensionalen Zustandsräumen agieren. Die Minimierung des ersten Zustandsraums erfolgt hierbei wie folgt:

Die Zustände des ersten Zustandsraums werden mit einem rekurrenten neuronalen Netz umfassend eine Eingangsschicht, eine rekurrente versteckte Schicht und eine Ausgangsschicht mit Hilfe von bekannten Zuständen als Trainingsdaten modelliert, wobei:

i) die Eingangsschicht und die Ausgangsschicht jeweils durch die Zustände in dem ersten Zustandsraum für die mehreren Zeitpunkte gebildet werden;
ii) die rekurrente versteckte Schicht durch versteckte Zustände mit einer Mehrzahl von versteckten Zustandsvariablen in einem zweiten Zustandsraum mit einer zweiten Dimension gebildet wird, wobei die zweite Dimension niedriger als die erste Dimension ist.

Nach dieser Minimierung wird dann das jeweilige Lern- bzw. Optimierungsverfahren in dem reduzierten zweiten Zustandsraum der versteckten Zustände durchgeführt.

In einer weiteren Ausgestaltung des erfindungsgemäßen Verfahrens werden in Schritt b) die Zustände des technischen Systems und/oder die zugeordneten Aktionen in Abhängigkeit von vorbestimmten Kriterien diskretisiert. Durch eine entsprechende, an das Problem angepasste Diskretisierung kann erreicht werden, dass die Zustände bzw. Aktionen des technischen Systems nur solche Größen annehmen, welche für das jeweilige Problem als erfolgsversprechend eingestuft werden.

In einer weiteren, besonders bevorzugten Ausführungsform der Erfindung werden für die Zustände und/oder die zugeordneten Aktionen des technischen Systems ein oder mehrere Wertebereiche festgelegt oder gelernt, innerhalb der die Werte der Zustände und/oder Aktionen bei der Anwendung des Lern- und/oder Optimierungsverfahrens in Schritt b) liegen müssen. Auf diese Weise wird eine geeignete Exploration des Raums der Zustände und Aktionen derart geschaffen, dass keine verbotenen Systemzustände ausgewählt werden. Dies kann explizit durch Grenzen in der Parameterwahl erreicht werden oder das System kann selbst erlernen, schlechte Systemzustände zu vermeiden und die für das technische System spezifische Lage der Grenzen herauszufinden.

In einer besonders bevorzugten Ausführungsform der Erfindung werden die Wertebereiche durch ein Bestrafungssignal bei der Anwendung des jeweiligen Lern- und/oder Optimierungsverfahrens auf das Simulationsmodell in Schritt b) gelernt, wobei ein Bestrafungssignal umso größer ist, je stärker die Abweichung der mit dem Lern- und/oder Optimierungsverfahren bestimmten Zustände und/oder Aktionen von gemessenen oder erlaubten Zuständen und/oder Aktionen ist, wobei erlaubte Zustände bzw. Aktionen vorab definiert werden und den bevorzugten Betriebsbereich des technischen Systems charakterisieren.

Ein besonders bevorzugter Anwendungsbereich der Erfindung ist die Steuerung von Turbinen, und zwar insbesondere von Gasturbinen. Hierbei umfassen die Zustände des technischen Systems und/oder die diesen Zuständen zugeordneten Aktionen eine oder mehrere der folgenden Größen:

Gesamtleistung der Gasturbine; ein oder mehrere Drucke und/oder Temperaturen in der Gasturbine oder in der Umgebung der Gasturbine; Brennkammerbeschleunigungen in der Gasturbine; ein oder mehrere Einstellparameter an der Gasturbine, insbesondere Ventileinstellungen und/oder Kraftstoffverhältnisse und/oder Vorleitschaufeln.

Das Lern- bzw. Optimierungsverfahren, das in Schritt b) auf das Simulationsmodell angewendet wird, kann bspw. als Lern- bzw. Optimierungsziel niedrige Brennkammerbeschleunigungen umfassen.

Neben dem oben beschriebenen Verfahren betrifft die Erfindung ferner ein Computerprogrammprodukt mit einem auf einem maschinenlesbaren Träger gespeicherten Programmcode zur Durchführung des erfindungsgemäßen Verfahrens, wenn das Programm auf einem Rechner abläuft.

Ausführungsbeispiele der Erfindung werden nachfolgend anhand der beigefügten Figuren detailliert beschrieben.

Es zeigen:

Fig. 1      eine schematische Darstellung eines rekurrenten neuronalen Netzes, welches in einer Ausführungsform der Erfindung zur Erstellung des Simulationsmodells des technischen Systems verwendet wird;

Fig. 2      eine schematische Darstellung, welche ein rekurren- tes neuronales Netz zeigt, das in einem Lernverfah- ren eingesetzt wird, das gemäß der Erfindung aus der Mehrzahl von Lern- und/oder Optimierungsverfah- ren ausgewählt werden kann; und

Fig. 3      eine schematische Darstellung, welche das Lernen einer Aktionsauswahlregel durch das rekurrente neu- ronale Netz der Fig. 2 in Kombination mit einem Feed-Forward-Netz wiedergibt.

Die nachfolgend beschriebenen Ausführungsformen des erfindungsgemäßen Verfahrens sind auf beliebige technische Systeme anwendbar. Besonders bevorzugt werden die nachfolgenden Ausführungsformen jedoch für eine Gasturbine verwendet, wobei die Gasturbine bspw. durch einen Zustandsvektor repräsentiert wird, der die nachfolgenden elf Zustandsvariablen umfasst:

| GtLstg | = Gasturbinenleistung |
|---|---|
| PrDFi | = Druckverlust bei den Ansaugfiltern |
| VerdPr | = Verdichterenddruck |
| VerdT | = Verdichterendtemperatur |
| Schaufel = | Vorleitschaufelstellung |
| DrVBr | = Druckverlust in der Brennkammer |
| PilotG | = Pilotgasstellventilhub |
| GasDr | = Gasdruck |
| GasT | = Gastemperatur |
| AbgasT | = Abgastemperatur |
| BkB | = Brennkammerbeschleunigungen |

In einer besonders bevorzugten Ausführungsform ist das erfindungsgemäße Verfahren derart ausgestaltet, dass das Lern- bzw. Optimierungsziel ein möglichst kleiner Wert der Variablen BkB ist, die mit niedrigen Brennkammerbeschleunigungen bzw. niedrigem Brummen der Turbine gleichzusetzen ist.

Als Eingangsgrößen werden in dem erfindungsgemäßen Verfahren Messwerte der Zustandsvariablen des technischen Systems zu verschienen Zeitpunkten verwendet. In Schritt a) des erfindungsgemäßen Verfahrens werden diese Messwerte eingesetzt, um das technische System rechnergestützt zu simulieren. Es können hierbei beliebige aus dem Stand der Technik bekannte Verfahren verwendet werden, um ein entsprechendes Simulationsmodell des technischen Systems zu erstellen. Als besonders geeignet haben sich hierbei neuronale Netze herausgestellt.

Im Folgenden wird anhand von Fig. 1 ein auf einem rekurrenten neuronalen Netz beruhendes Verfahren zur Erstellung des Simulationsmodells in Schritt a) des erfindungsgemäßen Verfahrens beschrieben. Die Zustände des technischen Systems werden dabei jeweils durch einen Zustand in einem ersten Zustandsraum charakterisiert, wobei der erste Zustandsraum eine Dimension aufweist, welche durch die Anzahl der Zustandsvariablen der Zustände $x_t$ des technischen Systems zu jeweiligen Zeitpunkten t charakterisiert ist. Im obigen Beispiel betreffend eine Gasturbine handelt es sich um einen Zustandsraum mit der Dimension 11, da 11 Zustandsvariablen vorliegen. Der Zustand $x_t$ ist somit ein Zustandsvektor mit Einträgen von Zustandsvariablen eines technischen Systems, wobei Werte der Zustandsvariablen gemessen werden können.

Das Netz der Fig. 1 umfasst eine Eingangsschicht I, welche zu einem betrachteten Zeitpunkt t aus dem entsprechenden Zustand $x_t$ und vergangenen Zuständen $x_{t-1}$, $x_{t-2}$, $x_{t-3}$ usw. gebildet ist. Die Zustände der Eingangsschicht sind über eine Matrix B mit versteckten Zuständen einer versteckten Schicht H sowie eine Bias/Schwellwert θ gekoppelt, wobei einem Zustand $x_t$ zu einem Zeitpunkt t ein entsprechender versteckter Zustand $s_t$ zum gleichen Zeitpunkt in der versteckten Schicht H zugeordnet ist. Die versteckte Schicht H ist hierbei eine rekurrente Schicht, bei der ein versteckter Zustand $s_t$ ein Zustandsvektor mit einer vorgegebenen Anzahl von versteckten Zustandsvariablen ist, wodurch ein Zustandsraum mit einer zweiten Dimension entsprechend der Anzahl an versteckten Zustandsvariablen gebildet wird. Ein Zustand $s_t$ zu einem Zeitpunkt t ist über eine Matrix A und dem Bias θ mit dem Zustand $s_{t+1}$ zum nachfolgenden Zeitpunkt gekoppelt. Die einzelnen versteckten Zustände $s_t$ der Schicht H sind wiederum mit einer Ausgangsschicht O verbunden, welche - analog zur Eingangsschicht I - durch Zustände $x_t$ des technischen Systems repräsentiert wird.

Hierbei ist ein versteckter Zustand $s_t$ zu einem jeweiligen Zeitpunkt t mit dem Zustand $x_{t+1}$ zum nächsten Zeitpunkt t+1 über eine Matrix C gekoppelt.

Das in Fig. 1 gezeigte rekurrente neuronale Netz wird mit Trainingsdaten umfassend gemessene Zustände des technischen Systems trainiert, so dass mit dem Netz das dynamische zeitliche Verhalten des entsprechenden technischen Systems modelliert wird. Das rekurrente Netz gemäß Fig 1 stellt dabei ein Netz mit dynamischer konsistenter zeitlicher Entfaltung unter Berücksichtigung zukünftiger Zustände dar, was im Englischen als "Network with Dynamically Consistent Overshooting" bezeichnet wird. Dies bedeutet, dass in dem Netz zu einem Zeitpunkt t nicht nur Zustände $x_t$, $x_{t-1}$,..., usw. in der Vergangenheit, sondern auch zukünftige Zustände $x_{t+1}$, $x_{t+2}$,..., usw. berücksichtigt werden, wobei die eigenen Vorhersagen des Netzes in der Ausgangsschicht, d.h. in Fig. 1 die Zustände $x_{t+1}$, $x_{t+2}$ und $x_{t+3}$ wiederum als Eingaben in dem Netz verwendet werden. Das rekurrente neuronale Netz wurde insbesondere mit 17 Zuständen in der Vergangenheit und 8 zukünftigen Zuständen getestet. In Fig. 1 ist durch gestrichelte Linien angedeutet, welche Zustände der Ausgangsschicht O mit entsprechenden Zuständen der versteckten Schicht H koppeln. In dem rekurrenten neuronalen Netz gemäß Fig. 1 werden somit die Zustände $x_\tau$ des Systems selbst vorhergesagt. Auf diese Weise kann die Dynamik des zugrunde liegenden technischen Systems modelliert werden. Mathematisch wird das Netz der Fig. 1 durch die folgenden Gleichungen repräsentiert:

$$s_\tau = \tanh(As_{\tau-1} + Bx_\tau + \theta)$$

$$x_{\tau+1} = Cs_\tau$$

$$\sum_t \sum_\tau (x_\tau - x_\tau^d)^2 \rightarrow \min_{A,B,C,\theta}$$

Die Gleichungen betreffen das rekurrente neuronale Netz zu einem Zeitpunkt t, wobei zu einem Zeitpunkt t ein Wertebereich von Zeitpunkten $\tau$ berücksichtigt wird, wobei der Wertebereich von $\tau$ eine vorbestimmte Anzahl m von Zeitschritten vor dem Zeitpunkt t und eine vorbestimmte Anzahl n von Zeitpunkten nach dem Zeitpunkt (dem sog. Overshooting Part) umfasst.

Es gilt hierbei

$$t \in \{m,...,T - n\}$$

wobei T die Anzahl an Zeitpunkten repräsentiert, für welche Trainingsdaten, d.h. gemessene Zustände des technischen Systems, vorliegen.

Gemäß den obigen Gleichungen werden als Parameter des neuronalen Netzes die Matrizen A, B, C sowie der Bias $\theta$ bestimmt, wobei diese Parameter derart gewählt werden, dass der quadratische Fehler zwischen durch das Netz bestimmten Zuständen $x_\tau$ und den entsprechenden gemessenen Zuständen $x_\tau^d$ gemäß den Trainingsdaten minimal ist. Hieraus ergibt sich somit ein simuliertes Modell des technischen Systems, welches anschließend zur Durchführung der weiteren Schritte b) bis d) des erfindungsgemäßen Verfahrens eingesetzt werden kann.

In Schritt b) des erfindungsgemäßen Verfahrens wird das erstellte Simulationsmodell dazu verwendet, um eine Mehrzahl von Lern- und/oder Optimierungsverfahren auf dieses Modell anzuwenden. Optional kann vor der Durchführung des Schrittes b) ein Verfahren zur sog. Zustandsraumminimierung eingesetzt werden, bei dem die Anzahl der Zustandsvariablen eines Zustandsvektors reduziert werden. Dies hat den Vorteil, dass die Anzahl an Lern- und/oder Optimierungsverfahren, welche auf das Simulationsmodell angewendet werden, deutlich erhöht wird, da viele bekannte Lern- und/oder Optimierungsverfahren nur in Zustandsräumen mit begrenzter Dimension eingesetzt werden können. Zur Zustandsraumminimierung kann ebenfalls das in Fig. 1 gezeigte rekurrente neuronale Netz eingesetzt werden. Nunmehr sind jedoch die Variablen der Eingangsschicht nicht mehr die gemessenen Zustände des technischen Systems, sondern die mit dem Simulationsmodell simulierten Zustände. Zur Zustandsraumminimierung werden nunmehr in der versteckten Schicht H versteckte Zustandsvektoren $s_t$ gewählt, deren Dimension geringer als die Dimension der Zustandsvektoren in der Eingangsschicht O ist. Die Dimension wird hierbei derart gewählt, dass sie möglichst klein ist, jedoch noch ausreichend gut das technische System simuliert. Dies kann über die Abweichung der Zustandsvektoren der Eingangsschichten I von den Zugangsvektoren der Ausgangsschicht O festgestellt werden. Als Ergebnis liefert die Zustandsraumminimierung einen neuen Zustandsraum der versteckten Zustandsvariablen mit einer reduzierten Dimension gegenüber dem ursprünglichen Zustandsraum. Auf diesem reduzierten Zustandsraum können dann ein oder mehrere Lern- und/oder Optimierungsverfahren gemäß Schritt b) des erfindungsgemäßen Verfahrens angewendet werden. Wie bereits erwähnt, ist der Schritt der Zustandsraumminimierung optional und kann gegebenenfalls auch weggelassen werden. Ferner kann die Zustandsraumminimierung nur auf einen Teil der in Schritt b) verwendeten Lern- und/oder Optimierungsverfahren angewendet werden.

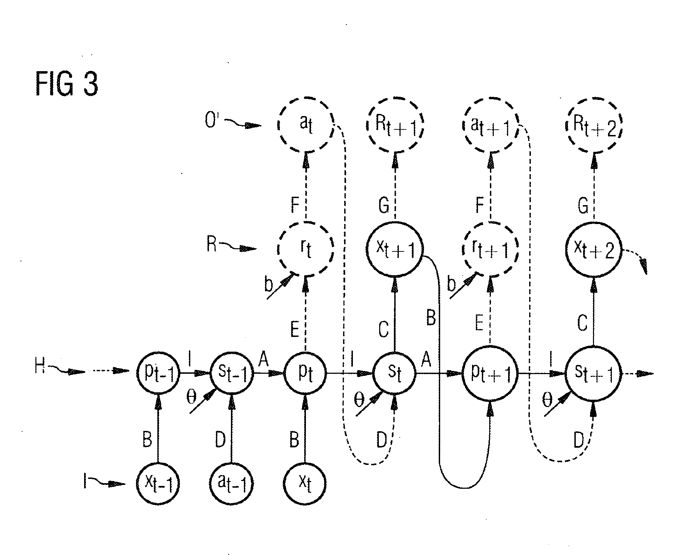

In Schritt b) des erfindungsgemäßen Verfahrens können beliebige Arten von Lern- und/oder Optimierungsverfahren verwendet werden, insbesondere auch aus dem Stand der Technik bekannte Lern- und/oder Optimierungsverfahren, wie z.B. ein adaptiver heuristischer Kritik-Algorithmus, ein Q-Lerning-Algorithmus oder ein Prioritized-Sweeping-Algorithmus. Nachfolgend wird ein mögliches Lernverfahren aus der Vielzahl von Lernverfahren beschrieben, welches jedoch noch nicht aus dem Stand der Technik bekannt ist. Es handelt sich hierbei um ein Lernverfahren, bei dem ein rekurrentes neuronales Netz mit einem Feed-Forward-Netz kombiniert wird. Das Verfahren wird nachfolgend anhand von Fig. 2 und Fig. 3 beschrieben.

Das nachfolgend beschriebene Lernverfahren beruht auf der Beschreibung des technischen Systems auf der Basis des Zustandsraums X, der die mit dem Simulationsmodell simulierten Zustände $x_t$ umfasst, und auf der Basis eines Aktionsraums A, der die abhängig von einem Zustand $x_t$ auszuführenden Aktionen $a_t$ repräsentiert. Die Aktionen $a_t$ sind dabei vorzugsweise Vektoren mit einer Mehrzahl von Einträgen, wobei jeder Eintrag für die Veränderung einer Stellgröße am technischen System steht.

Es wird davon ausgegangen, dass das technische System mit einem Markov Entscheidungsprozess MDP (MDP = Markov Decision Process) mit einer stochastischen Übergangsfünktion P beschrieben werden kann. Für diesen Prozess existiert eine Belohnungs- oder Kostenfunktion c: X x A $\rightarrow$ R, wobei R den Raum der Belohnungen darstellt, welche das System für die Wahl einer Aktion $a_t$ im Zustand $x_t$ erhält. Es ist nunmehr das Ziel, eine optimale Regel $\Pi$:X $\rightarrow$ A zu bestimmen, welche die erwartete kumulierte oder durchschnittliche Belohnungsfunktion c für jeden Zustand $x_t$ maximiert. Das Maximieren der Belohnungsfunktion c entspricht dabei einer möglichen Ausgestaltung einer Aktionsauswahlregel, wie sie in Anspruch 10 definiert ist. Die Belohnungsfunktion wird insbesondere so festgelegt, dass sie erwünschte Eigenschaften des technischen Systems widerspiegelt, wobei das Optimum dann erreicht wird, wenn die Funktion maximal ist. Im einfachsten Fall könnte die Kostenfunktion beispielsweise ein vorteilhafter gewünschter Zustand des technischen Systems sein, der dann optimal ist, wenn er einen Maximalwert aufweist. Im Folgenden wird davon ausgegangen, dass das technische System ein deterministischer Markov Entscheidungsprozess mit diskreten Zeitschritten ist, wobei die Zustandsräume X und A kontinuierlich sind.

In der nachfolgend beschriebenen Ausführungsform wird der Markov Entscheidungsprozess mit einem rekurrenten neuronalen Netz RNN modelliert, wodurch eine Abbildung des dynamischen Verhaltens des technischen Systems, d.h. der Übertragungsfunktion P($\cdot$) durch eine hochdimensionale nichtlineare Systemgleichung abgebildet wird. Das in der hier beschriebenen Variante der Erfindung verwendete rekurrente neuronale Netz RNN ist dabei in Fig. 2 gezeigt. Das rekurrente neuronale Netz umfasst eine Eingangsschicht I, welche die Zustände und die Aktionen zu den einzelnen Zeitpunkten zeigt. Beispielhaft sind in Fig. 2 die Zustände $x_{t-1}$, $x_t$ sowie die Aktionen $a_{t-1}$, $a_t$, $a_{t+1}$ wiedergegeben. Die Eingangsschicht ist mit einer versteckten Schicht H über entsprechende Matrizen B und D gekoppelt, welche nachfolgend noch näher definiert sind. Die versteckte Schicht weist versteckte Zustände für jeden Zeitpunkt auf, wobei in Fig. 1 beispielhaft die Zustände $p_{t-1}$, $s_{t-1}$, $p_t$, $s_t$, $p_{t+1}$ und $s_{t+1}$ wiedergegeben sind. Die versteckte Schicht H ist hierbei rekurrent, da die einzelnen versteckten Zustände miteinander gekoppelt sind, was durch entsprechende Matrizen I (entspricht der Einheitsmatrix) und A sowie einem Bias $\theta$ in Fig. 2 wiedergegeben ist. Das rekurrente neuronale Netz der Fig. 2 weist ferner eine Ausgangsschicht O auf, welche durch die Zustände des technischen Systems gebildet ist, wobei in Fig. 2 die Zustände $x_t$, $x_{t+1}$ und $x_{t+2}$ wiedergegeben sind. Diese Zustände sind hierbei mit den versteckten Zuständen $s_{t-1}$, $s_t$ und $s_{t+1}$ jeweils durch eine Matrix C gekoppelt.

Das neuronale Netz gemäß Fig. 2 ist - analog wie das Netz der Fig. 1 - ein Netz mit dynamisch konsistenter zeitlicher Entfaltung unter Berücksichtigung zukünftiger Zustände ("Neural Network with Dynamically Consistent Overshooting"). Dies bedeutet, dass bei der Modellierung des neuronalen Netzes nicht nur Zeitpunkte $\tau$ in der Vergangenheit, sondern auch Zeitpunkte $\tau$ in der Zukunft berücksichtigt werden und die eigenen vorhergesagten Zustände des Netzes in der Ausgangsschicht als Eingaben für künftige Zustände in der Eingangsschicht verwendet werden. Der Parameter $\tau$ wird begrenzt durch die Länge der zurückliegenden Entfaltung m und der Länge des sog. Overshootings n, so dass gilt:

$\tau \in$ {t-m,...,t+n} für alle betrachteten Zeitpunkte t $\in$ {m,...,T-n}, wobei T die Anzahl an zur Verfügung stehenden Zeitpunkten repräsentiert, für die Trainingsdaten zum Lernen des neuronalen Netzes vorliegen. Das Overshooting ergibt sich aus Fig. 2 dadurch, dass auch zukünftige Zeitpunkte τ > t bei der Modellierung des technischen Systems durch das neuronale Netz berücksichtigt werden. Da diese zukünftigen Zeitpunkte nicht bekannt sind, werden die über das Netz in der Ausgangsschicht ausgegebenen Zustände auch wieder als Eingabe für den nächsten Zeitschritt verwendet. Dies ist in Fig. 2 für den Zeitpunkt t+1 gezeigt, bei dem der ausgegebene Zustand $x_{t+1}$ wiederum den versteckten Zustand $p_{t+1}$ der versteckten Schicht zugeführt wird.

In der hier beschriebenen Ausführungsform der Erfindung wird somit eine Sequenz an Zuständen $x_\tau$ und Aktionen $a_\tau$ auf der Eingangsseite des rekurrenten neuronalen Netzes geschaffen, wobei das Netz zeitlich in einem vorgegebenen Intervall, welches die Vergangenheit und die Zukunft berücksichtigt, entfaltet ist. Mathematisch lässt sich das rekurrente neuronale Netz der Fig. 1 durch die folgenden Gleichungen beschrieben, wobei in den Gleichungen die oben erwähnten Matrizen $\mathbf{I}$, A, B, C, D sowie der Bias θ enthalten sind:

$$s_\tau = \tanh(\mathbf{I}p_\tau + Da_\tau + \theta)$$

$$x_{\tau+1} = Cs_\tau$$

mit

$$p_\tau = As_{\tau-1} + Bx_\tau$$

Der Zustand $p_\tau$ wird hierbei als Prä-Zustand bezeichnet, der die Information von einem vorhergehenden versteckten Zustand $s_{\tau-1}$ und von dem externen Zustand $x_\tau$ aggregiert. Der Nichtlinearität in der versteckten Schicht wird hierbei mit dem Tangens Hyperbolicus ausgedrückt. Der Prä-Zustand $p_\tau$ weist die gleiche Dimension wie der versteckte Zustand $s_\tau$ auf und ist mit diesem über die Identitätsmatrix $\mathbf{I}$ verbunden, welche während des Trainings des neuronalen Netzes nicht gelernt wird. Der versteckte Zustand $s_\tau$ weist als Eingang eine Aktion $a_\tau$ auf und wird zur Berechnung des erwarteten nächsten Zustands $x_{\tau+1}$ des technischen Systems verwendet. Die Matrix D ist eine zusätzliche Matrix mit geeigneter Dimension, welche den Einfluss der Aktionen $a_\tau$ auf den Zustand $s_\tau$ berücksichtigt. Die Aktionen $a_\tau$ werden dem neuronalen Netz RNN auch als zukünftige Eingaben (τ > t) bereitgestellt, da sie die Dynamik des technischen Systems nicht direkt beeinflussen und deshalb nicht durch das Netz gelernt werden sollten. Um eine Vielzahl von möglichen Zuständen in dem Zustandsraum X des technischen Systems abzudecken, sollte das rekurrente neuronale Netz zur Modellierung des technischen Systems mit Trainingsdaten modelliert werden, bei denen die Aktionen $a_\tau$ zufällig gewählt sind. Ansonsten kann die gelernte Dynamik u.U. abhängig von einer bestimmten Regel sein. Die Trainingsdaten werden hierbei mit Hilfe des in Schritt a) erstellten Simulationsmodells bestimmt.

Ziel ist es nunmehr, ein mit Trainingsdaten gelerntes neuronales Netz der Fig. 2 mit einem bestärkenden Lernen (Reinforcement Learning) zum Erlernen der oben genannten optimalen Regel Π zu kombinieren. Dies wird dadurch erreicht, dass das rekurrente neuronale Netz der Fig. 2 mit einem weiteren sog. Kontrollnetz kombiniert wird, wodurch die obige Belohnungsfunktion c in dem neuronalen Netz implementiert wird.

In der hier beschriebenen Ausführungsform ist das zusätzliche Kontrollnetz ein dreischichtiges neuronales Feed-Forward-Netz mit einer Eingangsschicht, einer versteckten Schicht und einer Ausgangsschicht. Auch wenn weitere, komplexere Topologien möglich wären, kann mit dem hier beschriebenen Modell jede beliebige Art von Kontrollfunktion modelliert werden. Da die optimale Aktion $a_\tau$ vorhergesagt werden soll, wird das Kontrollnetz nur für in der Zukunft liegende Zeitpunkte (d.h. τ > t) mit dem rekurrenten neuronalen Netz gekoppelt. Für die vergangene zeitliche Entfaltung (d.h. τ < t) werden in dem rekurrenten neuronalen Netz die zuvor zugeführten Aktionen verwendet.

Fig. 3 zeigt das mit dem weiteren Feed-Forward-Netz gekoppelte rekurrente neuronale Netz, welches nachfolgend auch als RCNN (RCNN = Recurrent Control Neural Network) bezeichnet wird. Die Teile des Netzes, welche sich auf das Feed-Forward-Kontrollnetz beziehen, sind hierbei gestrichelt dargestellt. Das Kontrollnetz verwendet als Eingangsschicht die versteckten Zustände $p_t$, $p_{t+1}$,..., usw., welche mit einer versteckten Schicht R mit entsprechenden Zuständen $r_t$, $r_{t+1}$ usw. gekoppelt sind. Die versteckten Zustände $r_\tau$ sind hierbei mit den Zuständen $p_\tau$ über eine Matrix E sowie einen Bias b gekoppeit, d.h. es gilt:

$$r_\tau = \tanh(Ep_\tau + b)$$

Die versteckten Zustände $r_\tau$ sind ferner über eine Matrix F mit den zu modellierenden künftigen Aktionen $a_\tau$ gekoppelt. Darüber hinaus existiert eine Matrix G, welche zukünftige Zustände $x_{t+1}$, $x_{t+2}$ usw. mit Zuständen $R_{t+1}$, $R_{t+2}$ usw. koppelt, wobei letztere für die Berechnungsregel relevante Zustände sind.

Das neuronale Netz RCNN muss zwei unterschiedliche Aufgaben erfüllen. Zum einen muss es die Dynamik des zugrunde liegenden technischen Systems identifizieren und zum anderen muss es eine optimale Steuerung des technischen Systems mit Hilfe einer entsprechenden Aktionsauswahl- bzw. Belohnungsregel erreichen. Das Netz wird somit in zwei aufeinander folgenden Schritten trainiert, nämlich einem ersten Schritt zum Lernen des rekurrenten neuronalen Netzes mit Trainingsdaten und einem zweiten Schritt zum Lernen einer Belohnungsregel durch Kopplung des rekurrenten neuronalen Netzes mit einem Feed-Forward-Netz. Dieser Ansatz unterscheidet sich von herkömmlichen Verfahren, bei denen ein kombiniertes Lernen beider Aufgaben in einem Schritt versucht wird.

Im obigen ersten Schritt wird zunächst die Dynamik des zugrunde liegenden Markov Entscheidungsprozesses modelliert, der dem dynamischen Verhalten eines technischen Systems entspricht. Das Netzwerk RCNN wird demzufolge auf ein rekurrentes neuronales Netz RNN mit dynamisch konsistenter zeitlicher Entfaltung unter Berücksichtigung zukünftiger Zustände reduziert. Dieser erste Schritt wird mathematisch durch folgende Gleichungen repräsentiert:

$$s_\tau = \tanh(\mathbf{I}p_\tau + Da_\tau + \theta) \qquad (1)$$

$$x_{\tau+1} = Cs_\tau \qquad (2)$$

mit

$$p_\tau = As_{\tau-1} + Bx_\tau \qquad (3)$$

$$\sum_i \sum_\tau (x_\tau - x_\tau^d)^2 \to \min_{A,B,C,D,\theta} \qquad (4)$$

Die letzte Gleichung stellt hierbei die Aufgabe des Trainings dar, bei dem erreicht werden soll, dass ein Zustand $x_\tau$, der durch das rekurrente neuronale Netz RNN bestimmt ist, möglichst gut mit dem Zustand $x_\tau^d$ der Trainingsdaten übereinstimmt. Es wird hierbei eine Minimierung des quadratischen Fehlers in Bezug auf die Matrizen A, B, C und D und den Bias $\theta$ vorgenommen, welche die zu bestimmenden Parameter des rekurrenten neuronalen Netzes darstellen.

Nach dem ersten Schritt des Modellierens der Dynamik des technischen Systems werden die in diesem Schritt bestimmten Matrizen A, B, C und D sowie der Bias $\theta$ festgehalten, d.h. ihre Gewichte werden während des weiteren Trainings nicht verändert. Es werden nunmehr die Matrizen E und F sowie der Bias b aktiviert, welche in Fig. 3 dargestellt sind. Dies sind die einzigen Parameter während des zweiten Schritts des Lernens der Aktionsauswahlregel. In diesem Lernschritt erhält das rekurrente neuronale Netz keine zukünftigen Aktionen als externe Eingaben, sondern diese Aktionen werden mit dem Feed-Forward-Netz unter Berücksichtigung der Belohnungsfunktion gelernt. Darüber hinaus werden für vergangene Zeitschritte $\tau < t$ die Ausgabecluster $x_\tau$ weggelassen, da sie nur für die Modellierung der Dynamik im ersten Schritt benötigt wurden. Für zukünftige Zeitschritte $\tau > t$ des Netzwerkes wird die Fehlerfunktion gemäß Gleichung (4) ersetzt durch die Belohnungs- bzw. Kostenfunktion $c(\cdot)$, welche weiter unten in Gleichung (9) genannt ist. Dies wird in der Architektur durch die zusätzlichen Belohnungscluster $R_\tau$ erreicht, welche mit den Ausgabeclustern durch eine problemspezifische feste Matrix G, welche von der oben erwähnten Belohnungsfunktion $c(\cdot)$ abhängt, sowie einer

möglichen Aktivierungsfunktion h innerhalb der Ausgabecluster $X_\tau$ verbunden sind. Somit wird durch das Netz RCNN die Belohnungsfunktion c(·) innerhalb der neuronalen Architektur codiert. Dies bedeutet, dass der Belohnungscluster $R_\tau$ nicht nur auf der Basis des Ausgabeclusters $x_\tau$ berechnet werden muss, sondern dass er auch allgemeiner beschrieben werden kann, wodurch auch komplizierte Netzwerk-Architekturen ermöglicht werden. Beispielsweise kann die Belohnungsfunktion explizit gelernt werden, was insbesondere dann hilfreich ist, wenn c(·) nicht bekannt ist oder nur unvollständig spezifiziert ist. Dies kann durch ein weiteres zusätzliches dreischichtiges neuronales Netz mit der Ausgabe des RCNN als Eingaben erreicht werden.

Die Gewichte des Feed-Forward-Netzes werden nur gemäß der zurückpropagierten Belohnung von den Belohnungsclustern $R_\tau$ ($\tau > t$) adaptiert. Dies entspricht der Idee, dass der zweite Schritt des Lernens der Aktionsauswahlregel nicht zur Identifikation der Dynamik dient, sondern nur zum Lernen einer Regel, welche die Belohnung maximiert, wobei die Dynamik des Systems bereits zuvor modelliert wurde.

Der zweite Schritt des Lernens der Aktionsauswahlregel kann durch die nachfolgenden Gleichungen (5) bis (9) mathematisch wiedergegeben werden. Dabei werden die Matrizen E und F sowie der Bias b gelernt. Die Gleichungen (5) bis (9) lauten wie folgt:

$$s_\tau = \tanh(\mathbf{I}p_\tau + Da_\tau + \theta) \tag{5}$$

$$R_{\tau+1} = Gh(Cs_\tau) \qquad \text{für alle } \tau > t \tag{6}$$

mit

$$p_\tau = As_{\tau-1} + Bx_\tau \tag{7}$$

und

$$a_\tau = f(F\tanh(Ep_\tau + b)) \quad \text{für alle } \tau > t \tag{8}$$

$$\sum_t \sum_{\tau > t} c(R_\tau) \to \min_{E,F,b} \tag{9}$$

Sowohl bei der Modellierung der Dynamik des technischen Systems gemäß den Gleichungen (1) bis (4) als auch bei dem Lernen der Aktionsauswahlregel gemäß Gleichungen (5) bis (9) wird das rekurrente neuronale Netz mit den gleichen Trainingsmustern T und mit einem hinlänglich aus dem Stand der Technik bekannten Backpropagation-Verfahren gemäß Druckschrift [1] trainiert. Jedes Trainingsmuster T entspricht hierbei einem Zeitpunkt, dem entsprechende Trainingsdaten in der Form des Zustands des technischen Systems und der durchgeführten Aktion zu diesem Zeitpunkt zugeordnet sind. Der Schritt des Lernens der Aktionsauswahlregel kann hierbei als Rückwärtspropagation des Fehlers der Belohnungsfunktion c(·) angesehen werden.

Die im Vorangegangenen beschriebene Ausführungsform des rekurrenten neuronalen Kontrollnetzwerks RCNN kombiniert in idealer Weise die Vorteile eines rekurrenten neuronalen Netzes RNN mit dynamisch konsistenter zeitlicher Entfaltung unter Berücksichtigung zukünftiger Zustände zur Identifikation der Dynamik mit einem dreischichtigen neuronalen Kontrollnetz zum Lernen der Aktionsauswahlregel. Auf diese Weise wird eine hohe Approximationsgenauigkeit erreicht, und es können auch komplexe dynamische Systeme auf sehr dateneffiziente Weise gesteuert werden. Zusätzlich kann das System auf einfache Weise zu höheren Dimensionen skaliert werden, und eine nur teilweise beobachtbare Umgebung aus Zuständen des technischen Systems kann rekonstruiert werden. Ferner können mit dem Netz sehr gut kontinuierliche Zustandsräume und Aktionsräume verarbeitet werden.

Im Vorangegangenen wurde eine Variante eines Lernverfahrens beschrieben, welches eines der Lernverfahren aus der Mehrzahl der Lernverfahren darstellt, welche in Schritt b) des erfindungsgemäßen Verfahrens auf das erstellte Simulationsmodell angewendet wird. Es wird zumindest noch ein weiteres Lernverfahren auf das erstellte Simulationsmodell angewendet, wobei dieses Lernverfahren ein beliebiges, beispielsweise aus dem Stand der Technik bekanntes Lernverfahren, wie ein tabellenbasiertes bestärkendes Lernverfahren, sein kann.

Aus den verwendeten Lern- bzw. Optimierungsverfahren wird in einem Schritt c) des erfindungsgemäßen Verfahrens nunmehr ein geeignetes Verfahren gemäß vorgegebener Kriterien ausgewählt. Die vorgegebenen Kriterien sind bspw. entsprechende Belohnungsfunktionen in den einzelnen Lernverfahren, insbesondere der Minimalwert der aufsummierten Kostenfunktionen gemäß Gleichungen (9) für das dort beschriebene Lernverfahren. Das Lernverfahren, welches den kleinsten Minimalwert einer solchen aufsummierten Kostenfunktion aufweist, wird als das am besten geeignete Lernverfahren in Schritt c) identifiziert. Die vorgegebenen Kriterien können z.B. auch derart festgelegt werden, dass eine Anzahl von Aktionen auf der Basis des in Schritt b) gelernten Lernverfahrens durchgeführt werden und anschließend bewertet wird, welches Lernverfahren zur kleinsten durchschnittlichen Belohnung gemittelt über alle durchgeführten Aktionen geführt hat.

Nach der Auswahl des am besten geeigneten Lernverfahrens erfolgt schließlich in Schritt d) die Regelung bzw. Steuerung des realen technischen Systems mit diesem ausgewählten Lern- bzw. Optimierungsverfahren. Das Lern- bzw. Optimierungsverfahren liefert hierbei bei einem vorgegebenen Zustand des technischen Systems die nachfolgend am technischen System durchzuführende Aktion, welche zu einem neuen Zustand führt, für den mit dem Lern- bzw. Optimierungsverfahren dann wiederum die nächste durchzuführende Aktion bestimmt werden kann.

Es gibt hierbei verschiedene Varianten der Regelung bzw. der Steuerung. Das in Schritt c) ausgewählte Lern- bzw. Optimierungsverfahren kann bspw. als initialer Regler gelernt werden. D.h., die anhand des Simulationsmodells mit dem ausgewählten Lern- bzw. Optimierungsverfahren gelernten Parameter werden von Beginn an bei der Regelung des technischen Systems verwendet. Alternativ ist es auch möglich, dass die gelernten Parameter des ausgewählten Lern- bzw. Optimierungsverfahrens zurückgesetzt werden und anschließend das ausgewählte Lern- bzw. Optimierungsverfahren an dem realen technischen System von Beginn an neu gelernt wird. Ebenso kann ausgehend von den bereits gelernten Parametern während der Regelung und/oder Steuerung des realen technischen Systems der Lernprozess fortgesetzt werden und die Parameter anhand des realen technischen Systems weiter verbessert werden. Genauso ist es möglich, dass die Parameter während der Steuerung des realen technischen Systems nicht mehr verändert werden.

Das Ergebnis des Lernprozesses des erfindungsgemäßen Verfahrens kann somit einerseits ein fertig gelernter Regler sein, der im Weiteren nicht mehr verändert wird und deshalb sehr viel geringere Anforderungen hinsichtlich Speicherbedarf und Rechenleistung stellt als während des Lernvorgangs. Andererseits kann das Ergebnis auch ein Regler sein, der durch permanentes Lernen stetig weiter verbessert wird oder sich durch das permanente Lernen an Veränderungen des Prozesses oder der Zielsetzung anpasst. Veränderungen des Prozesses können dabei Alterungseffekte, jahreszeitliche Einflüsse oder im Beispiel der Gasturbine langsame Veränderungen der Gasqualität oder der Gaszusammensetzung sein. Veränderungen der Zielsetzungen können durch Änderungen der einzelnen Prozesskosten und Prozesserlöse verursacht werden, wie z.B. bei Gasturbinen erhöhte Kosten der Emissionen im Vergleich zu den Erlösen des produzierten Stroms.

Das erfindungsgemäße Verfahren weist eine Reihe von Vorteilen auf. Durch die Optimierung der Regelung eines technischen Systems durch ein maschinelles Lernverfahren, z.B. ein bestärkendes Lernverfahren, ist es nicht mehr notwendig, das technische System manuell zu regeln. Dies hat den Vorteil, dass das Verfahren in der Lage ist, auch sehr komplexe, hochdimensionale und insbesondere stochastische Prozesse zu lösen, die der menschlichen Auffassungsgabe nur bedingt zugänglich sind. Darüber hinaus läuft die Auswahl des geeigneten Lern- bzw. Optimierungsverfahrens autonom an einem Simulationsmodell ab und ist daher mit erheblich geringerem Aufwand verbunden als ein Lernen an einem realen technischen System. In einer bevorzugten Ausführungsform werden hierbei für die Zustände bzw. Aktionen, die während des Lernens mit dem Lern- bzw. Optimierungsverfahren eingenommen werden, erlaubte Wertebereiche festgelegt bzw. gelernt. Ein Zustand bzw. eine Aktion, die außerhalb des Wertebereichs liegt, stellt einen verbotenen Systemzustand dar. Dies kann bspw. durch ein entsprechendes Bestrafungssignal beim Lernen berücksichtigt werden. Auf diese Weise wird eine gezielte Exploration des Zustandsraums gewährleistet, was dazu beiträgt, dass die Datenbasis, auf welcher das Regelungsverfahren vorab gelernt wird, an die zu lösende Aufgabe optimiert wird. Durch die Verwendung von bereits gelernten Parametern bei der Regelung bzw. Steuerung des tatsächlichen technischen Systems wird eine schnelle Einsetzbarkeit und ein sicherer Betrieb des Verfahrens gewährleistet. Durch die Verwendung von speziellen Verfahren, wie die oben beschriebene Minimierung des Zustandsraums oder die direkte neuronale Modellierung mit dem oben beschriebenen neuronalen Netz RCNN, wird auch die Regelung bzw. Steuerung von komplexen technischen Systemen, wie z.B. einer Gasturbinenregelung, ermöglicht.

Literaturverzeichnis:

[1] D.E. Rumelhart, G.E. Hinton, and R.J. Williams, "Learning internal representations by error propagation", in Parallel Distributed Processing: Explorations in The Microstructure of Cognition, D.E. Rumelhart and J.L.M. et al., Eds. Cambridge: MIT Press, 1986, vol. 1, pp. 318-362

[2] Leslie Pack Kaelbling; Michael L. Littman; Andrew W. Moore, Reinforcement Learning: A Survey, Journal of Artificial Intelligence Research 4 (1996) pp. 237-285

**Patentansprüche**

1. Verfahren zur rechnergestützten Regelung und/oder Steuerung eines technischen Systems, insbesondere einer Gasturbine, bei dem:

   a) ein Simulationsmodell des technischen Systems auf der Basis von bekannten, zeitlich aufeinander folgenden Zuständen ($x_t$) des technischen Systems erstellt wird;

   b) eine Mehrzahl von Lern- und/oder Optimierungsverfahren auf das Simulationsmodell angewendet werden, wobei die Lern- und/oder Optimierungsverfahren als Ergebnis jeweils gelernte Parameter und eine Folge von Zuständen ($x_t$) und den Zuständen ($x_t$) zugeordneten Aktionen ($a_t$) liefern und eine einem Zustand ($x_t$) zugeordnete Aktion ($a_t$) zu einem neuen Zustand ($x_{t+1}$) in der Folge führt;

   c) anhand der Ergebnisse der Mehrzahl von Lern- und/oder Optimierungsverfahren nach vorgegebenen Kriterien ein für die Regelung und/oder die Steuerung des technischen Systems geeignetes Lern- und/oder Optimierungsverfahren aus der Mehrzahl der Lern- und/oder Optimierungsverfahren ausgewählt wird, wobei die Auswahl des Lern- und/oder Optimierungsverfahrens in Abhängigkeit von einer Bewertung für jedes der Lern- und/ oder Optimierungs-verfahren erfolgt, wobei die Bewertung von dem Simulationsmodell ausgegeben wird und/ oder über das Ergebnis des jeweiligen Lern- und/oder Optimierungsverfahrens ermittelt wird;

   d) das technische System mit dem ausgewählten Lern- und/oder Optimierungsverfahren geregelt und/oder gesteuert wird, wobei die Regelung und/oder Steuerung in Abhängigkeit von einem Zustand ($x_t$) des technischen Systems die nachfolgend am technischen System durchzuführende Aktion ($a_t$) angibt.

2. Verfahren nach Anspruch 1, bei dem das technische System in Schritt d) mit dem ausgewählten Lernverfahren auf der Basis der in Schritt b) gelernten Parameter geregelt und/oder gesteuert wird, wobei die gelernten Parameter bei der Regelung und/oder Steuerung des technischen Systems nicht verändert werden.

3. Verfahren nach Anspruch 1 oder 2, bei dem das technische System in Schritt d) mit dem ausgewählten Lernverfahren derart geregelt und/oder gesteuert wird, dass zu Beginn der Regelung und/oder Steuerung die in Schritt b) gelernten Parameter verwendet werden, welche während der Regelung und/oder Steuerung mit Hilfe der sich bei der Regelung und/oder Steuerung ergebenden neuen Zustände ($x_t$) und Aktionen ($a_t$) weiter gelernt werden.

4. Verfahren nach einem der Ansprüche 1 bis 3, bei dem in Schritt d) die mit dem Lern- und/oder Optimierungsverfahren in Schritt b) gelernten Parameter zurückgesetzt werden und bei der Regelung und/oder Steuerung des technischen Systems neu gelernt werden.

5. Verfahren nach einem der vorhergehenden Ansprüche, bei dem das verwendete Simulationsmodell in Schritt a) auf der Basis eines rekurrenten neuronalen Netzes erstellt wird.

6. Verfahren nach einem der vorhergehenden Ansprüche, bei dem die Bewertung ein Maß für die Güte des Lern- und/ oder Optimierungsverfahrens in Bezug auf eine Bewertungs- oder Belohnungsfunktion ist.

7. Verfahren nach einem der vorhergehenden Ansprüche, bei dem die Mehrzahl der auf das Simulationsmodell angewendeten Lern- und/oder Optimierungsverfahren ein oder mehrere bestärkende Lernverfahren, insbesondere tabellenbasierte bestärkende Lernverfahren, umfasst.

8. Verfahren nach einem der vorhergehenden Ansprüche, bei dem die Mehrzahl der auf das Simulationsmodell angewendeten Lern- und/oder Optimierungsverfahren einen adaptiven heuristischen Kritik-Algorithmus und/oder einen Q-Learning-Algorithmus und/oder einen Prioritized-Sweeping-Algorithmus umfasst.

9.  Verfahren nach Anspruch 7 oder nach Anspruch 7 und 8, bei dem das bestärkende Lernverfahren oder eines der bestärkenden Lernverfahren derart ausgestaltet ist, dass:

    - das dynamische Verhalten des technischen Systems mit einem rekurrenten neuronalen Netz mit Hilfe von Trainingsdaten umfassend mit dem Simulationsmodell ermittelte Zustände ($x_t$) und Aktionen ($a_t$) zu mehreren Zeitpunkten (t) modelliert wird, wobei das rekurrente neuronale Netz gebildet ist durch wenigstens eine Eingangsschicht (I) umfassend die Zustände ($x_t$) des technischen Systems und die am technischen System durchgeführten Aktionen ($a_t$) zu den mehreren Zeitpunkten (t), wenigstens eine versteckte rekurrente Schicht (H) umfassend versteckte Zustände ($s_t$, $p_t$) und wenigstens eine Ausgangsschicht (O) umfassend die Zustände ($x_t$) des technischen Systems zu den mehreren Zeitpunkten (t);
    - eine Aktionsauswahlregel gelernt wird, indem das rekurrente neuronale Netz für einen aktuellen und zukünftige Zeitpunkte (t) mit einem weiteren neuronalen Netz umfassend wenigstens eine Eingangsschicht (H), wenigstens eine versteckte Schicht (R) umfassend versteckte Zustände ($r_t$) und wenigstens eine Ausgangsschicht (O') gekoppelt wird, wobei die Eingangsschicht (H) des weiteren neuronalen Netzes zu einem jeweiligen Zeitpunkt (t) wenigstens einen Teil der versteckten Zustände ($p_t$) des rekurrenten neuronalen Netzes zu dem jeweiligen Zeitpunkt (t) umfasst und die Ausgangsschicht (O') des weiteren neuronalen Netzes zu dem jeweiligen Zeitpunkt die am technischen System durchgeführte Aktion ($a_t$) zu dem jeweiligen Zeitpunkt umfasst;
    - Zustände ($x_t$) des technischen Systems und zugeordnete Aktionen ($a_t$) durch das mit dem weiteren neuronalen Netz gekoppelte rekurrente neuronale Netz mit gelernter Aktionsauswahlregel bestimmt werden.

10. Verfahren nach einem der vorhergehenden Ansprüche, bei dem ein jeweiliger Zustand ($x_t$) des technischen Systems durch eine Mehrzahl von Zustandsvariablen in einem ersten Zustandsraum mit einer ersten Dimension charakterisiert wird und/oder eine jeweilige, einem Zustand ($x_t$) zugeordnete Aktion ($a_t$) durch eine Mehrzahl von Aktionsvariablen charakterisiert wird.

11. Verfahren nach einem der vorhergehenden Ansprüche, bei dem eine jeweilige, einem Zustand ($x_t$) zugeordnete Aktion ($a_t$) durch die Veränderung von einer oder mehreren Stellgrößen des technischen Systems charakterisiert ist, wobei vorzugsweise zumindest ein Teil der Stellgrößen Zuständen ($x_t$) des technischen Systems entsprechen.

12. Verfahren nach Anspruch 10 oder nach Anspruch 10 und 11, bei dem

    - eine Minimierung des ersten Zustandsraums vor der Durchführung des Schritts b) für zumindest einen Teil der Lern- und/oder Optimierungsverfahren aus der Mehrzahl der Lern- und/oder Optimierungsverfahren jeweils wie folgt durchgeführt wird:

    die Zustände ($x_t$) des ersten Zustandsraums werden mit einem rekurrenten neuronalen Netz umfassend eine Eingangsschicht (I), eine rekurrente versteckte Schicht (H) und eine Ausgangsschicht (O) mit Hilfe von mit den Simulationsmodell ermittelten Zuständen als Trainingsdaten modelliert, wobei:

    i) die Eingangsschicht (I) und die Ausgangsschicht (O) jeweils durch die Zustände ($x_t$) in dem ersten Zustandsraum für die mehreren Zeitpunkte (t) gebildet werden;
    ii) die rekurrente versteckte Schicht (H) durch versteckte Zustände ($s_t$) mit einer Mehrzahl von versteckten Zustandsvariablen in einem zweiten Zustandsraum mit einer zweiten Dimension gebildet wird, wobei die zweite Dimension niedriger als die erste Dimension ist;

    - auf den versteckten Zuständen ($s_t$) in dem zweiten Zustandsraum die jeweiligen Lern- und/oder Optimierungsverfahren des zumindest einen Teils der Lern- und/oder Optimierungsverfahren gemäß Schritt b) durchgeführt werden.

13. Verfahren nach einem der vorhergehenden Ansprüche, bei dem in Schritt b) die Zustände ($x_t$) und/oder Aktionen ($x_t$) in Abhängigkeit von vorbestimmten Kriterien diskretisiert werden.

14. Verfahren nach einem der vorhergehenden Ansprüche, bei dem für die Zustände ($x_t$) und/oder die zugeordneten Aktionen ($a_t$) des technischen Systems ein oder mehrere Wertebereiche festgelegt oder gelernt werden, innerhalb der die Werte der Zustände ($x_t$) und/oder Aktionen ($a_t$) bei der Anwendung der Lern- und/oder Optimierungsverfahrens in Schritt b) liegen müssen.

**15.** Verfahren nach Anspruch 14, bei dem die Wertebereiche durch ein Bestrafungssignal bei der Anwendung des jeweiligen Lern- und/oder Optimierungsverfahren auf das Simulationsmodell in Schritt b) gelernt werden, wobei ein Bestrafungssignal umso größer ist, je stärker die Abweichung der mit dem Lern- und/oder Optimierungsverfahren bestimmten Zustände ($x_t$) und/oder Aktionen ($a_t$) von gemessenen oder erlaubten Zuständen ($x_t$) und/oder Aktionen ($a_t$) ist.

**16.** Verfahren nach einem der vorhergehenden Ansprüche, bei dem mit dem Verfahren eine Gasturbine geregelt und/oder gesteuert wird, wobei die Zustände des technischen Systems und/oder die den Zuständen ($x_c$) zugeordneten Aktionen ($a_t$) eine oder mehrere der folgenden Größen umfassen:

Gesamtleistung der Gasturbine; ein oder mehrere Drucke und/oder Temperaturen in der Gasturbine oder in der Umgebung der Gasturbine; Brennkammerbeschleunigungen in der Gasturbine; ein oder mehrere Einstellparameter an der Gasturbine, insbesondere Ventileinstellungen und/oder Kraftstoffverhältnisse und/oder Vorleitschaufeln.

**17.** Verfahren nach Anspruch 16, bei dem die Mehrzahl von Lern- und/oder Optimierungsverfahren, die in Schritt b) auf das Simulationsmodell angewendet werden, als Lern- und/oder Optimierungsziel niedrige Brennkammerbeschleunigungen umfassen.

**18.** Computerprogrammprodukt mit einem auf einem maschinenlesbaren Träger gespeicherten Programmcode zur Durchführung des Verfahrens nach einem der vorhergehenden Ansprüche, wenn das Programm auf einem Rechner abläuft.

**Claims**

**1.** Method for computer-aided regulation and/or control of a technical system, especially of a gas turbine, in which

a) a simulation model of the technical system is created on the basis of known states ($x_t$) of the technical system following on in time from each other;
b) a plurality of learning and/or optimisation methods are applied to the simulation model, with the learning and/or optimisation methods delivering as a result in each case learned parameters and a sequence of states ($x_t$) and the states ($x_t$) delivering assigned actions ($a_t$) and an action ($a_t$) assigned to a state leading to a new state ($x_{t+1}$) in the sequence;
c) on the basis of the results of the plurality of learning and/or optimisation methods, in accordance with predetermined criteria, a suitable learning and/or optimisation method is selected from the plurality of learning and/or optimisation methods, with the selection of the learning and/or optimisation method being undertaken as a function of an evaluation for each of the learning and/or optimisation methods, with the evaluation being output by the simulation model and/or being determined via the result of the respective learning and/or optimisation method;
d) the technical system is regulated and/or controlled with the selected learning and/or optimisation method, with the regulation and/or control specifying as a function of a state ($x_t$) of the technical system the subsequent action ($a_t$) to be carried out on the technical system.

**2.** Method according to claim 1, in which the technical system in step d) is regulated and/or controlled with the selected learning method on the basis of the parameters learned in step b), with the learned parameters not being changed during the regulation and/or control of the technical system.

**3.** Method according to claim 1 or 2, in which the technical system is regulated and/or controlled in step d) with the selected learning method such that at the beginning of the regulation and/or control the parameters learned in step b) are used which were further learned during the regulation and/or control with the aid of the new states ($x_t$) and ($a_t$) produced during the regulation and control.

**4.** Method according to one of the claims 1 to 3, in which the parameters learnt with the learning and/or optimisation method in step b) are reset in step d) and will be learned anew during the regulation and/or control of the technical system.

**5.** Method according to one of the previous claims, in which the simulation model used in step a) is created on the basis of a recurrent neural network.

6. Method according to one of the previous claims, in which the evaluation is a measure of the quality of the learning and/or optimisation method in relation to an evaluation or reward function.

7. Method according to one of the previous claims in which the plurality of learning and/or optimisation methods applied to the simulation model comprises one or more reinforcement learning methods, especially table-based reinforcement learning methods.

8. Method according to one of the previous claims, in which the plurality of the learning and/or optimisation methods applied to the simulation model includes an adaptive heuristic criticism algorithm and/or a Q learning algorithm and/or a prioritised sweeping algorithm.

9. Method according to claim 7 or according to claim 7 or 8, in which the reinforcement learning method or one of the reinforcement learning methods is designed such that

- the dynamic behaviour of the technical system is modelled with a recurrent neural network with the aid of training data comprising states ($x_t$) and actions ($a_t$) determined with the simulation model at a number of times (t), with the recurrent neural network being formed by a least one input layer (I) comprising the states ($x_t$) of the technical system and the actions ($a_t$) carried out on the technical system for the number of times (t), and least one hidden recurrent layer (H) comprising hidden states ($s_t$, $p_t$) and a least one output layer (0) comprising the states ($x_t$) of the technical system for the number of times (t);
- an action and selection rule is learned by the recurrent neural network for a current and future times (t) being coupled to a further neural network comprising at least one input layer (H), at least one hidden layer (R) comprising hidden states ($r_t$) and at least one output layer (0'), with the input layer (H) of the further neural network at a respective (t) comprising at least one part of the hidden states ($p_t$) of the recurrent neural network out of the respective time (t) and the output layer (0') of the further neural network at the respective time comprising the action (at) carried out on the technical system at the respective point in time;
- states ($x_t$) of the technical system and assigned actions ($a_t$) are determined by the recurrent neural network coupled to the further neural network with learned action selection rules.

10. Method according to one of the previous claims in which a respective state ($x_t$) of the technical system is **characterised by** a plurality of state variables in a first state space with a first dimension and/or a respective action ($a_t$) assigned to a state ($x_t$) is **characterised by** a plurality of action variables.

11. Method according to one of the previous claims, in which a respective action ($a_t$) assigned to a state ($x_t$) is **characterised by** the change to one or more manipulated variables of the technical system, with preferably at least one part of the manipulated variables corresponding to states ($x_t$) of the technical system.

12. Method according to claim 10 or according to claim 10 and 11, in which

- a minimisation of the first state space is undertaken before the execution of step b) for a least one part of the learning and/or optimisation methods from the plurality of learning and/or optimisation methods as follows in each case:

the states ($x_t$) of the first state space are modelled as training data with a recurrent neural network comprising an input layer (I), a recurrent hidden layer (H) and an output layer (0) with the aid of states determined with the simulation model, with:

i) the input layer (I) and the output layer (0) each being formed by the states ($x_t$) in the first state space for the number of times (t);
ii) the recurrent hidden layer (H) being formed by hidden states ($s_t$) with a plurality of hidden state variables in a second state space with a second dimension, with the second dimension being lower than the first dimension;

- the respective learning and/or optimisation method of the least one part of the learning and/or optimisation methods in accordance with step b) being carried out on the hidden states ($s_t$) in the second state space.

**13.** Method according to one of the previous claims, in which in step b) the states ($x_t$) and/or actions ($x_t$) are discretised depending on prespecified criteria.

**14.** Method according to one of the previous claims, in which for the states ($x_t$) and/or the assigned actions ($a_t$) of the technical system, one or more ranges of values are defined or learned within which the values of the states ($x_t$) and/or actions ($a_t$) must lie in the application of the learning and/or optimisation method in step b).

**15.** Method according to claim 14 in which the range of values are learned by a penalty signal in the application of the respective learning and/or optimisation method to the simulation model in step b), with a penalty signal being all the larger, the stronger the deviation of the states ($x_t$) and/or actions ($a_t$) defined with the learning and/or optimisation method is from the measured or allowed states ($x_t$) and/or actions ($a_t$).

**16.** Method according to one of the previous claims, in which a gas turbine is regulated and/or controlled with the method, with the states of the technical system and/or the actions ($a_t$) assigned to the states ($x_t$) comprising one or more of the following variables: Overall power of the turbine; One or more pressures and/or temperatures in the gas turbine or in the vicinity of the gas turbine; Combustion chamber accelerations in the gas turbine; One or more setting parameters on the gas turbine, especially valve settings and/or fuel ratios and/or inlet guide valves.

**17.** Method according to claim 16 in which the plurality of learning and/or optimisation methods which are applied in step b) to the simulation model comprise low combustion chamber accelerations as their learning and/or optimisation target.

**18.** Computer program product with a program code stored on a machine-readable medium for executing the method according to one of the previous claims when the program runs on a computer.

**Revendications**

**1.** Procédé de régulation et/ou commande assistée par ordinateur d'un système technique, notamment d'une turbine à gaz, dans lequel :

a) un modèle de simulation du système technique est établi sur la base d'états connus ($x_t$) du système technique se succédant dans le temps ;
b) une pluralité de procédés d'apprentissage et/ou d'optimisation est appliquée au modèle de simulation, les procédés d'apprentissage et/ou d'optimisation livrant à chaque fois comme résultat des paramètres appris ainsi qu'une suite d'états ($x_t$) et d'actions ($a_t$) associées aux états ($x_t$) et une action ($a_t$) associée à un état ($x_t$) conduit à un nouvel état ($x_{t+1}$) dans la suite ;
c) un procédé d'apprentissage et/ d'optimisation adapté pour la régulation et/ou la commande du système technique est choisi parmi la pluralité des procédés d'apprentissage et/ou d'optimisation sur la base des résultats de la pluralité de procédés d'apprentissage et/ou d'optimisation et en fonction de critères prédéfinis, le choix du procédé d'apprentissage et/ou d'optimisation s'effectuant en fonction d'une évaluation de chacun des procédés d'apprentissage et/ou d'optimisation, l'évaluation étant fournie par le modèle de simulation et/ou étant déterminée par le biais du résultat du procédé d'apprentissage et/ou d'optimisation respectif ;
d) le système technique étant régulé et/ou commandé par le procédé d'apprentissage et/ou d'optimisation choisi, la régulation et/ou commande indiquant, en fonction d'un état ($x_t$) du système technique, la prochaine action ($a_t$) à exécuter sur le système technique.

**2.** Procédé selon la revendication 1, dans lequel le système technique est régulé et/ou commandé par le procédé d'apprentissage choisi, dans l'étape d), sur la base des paramètres appris dans l'étape b), les paramètres appris n'étant pas modifiés pendant la régulation et/ou commande du système technique.

**3.** Procédé selon la revendication 1 ou 2, dans lequel le système technique est régulé et/ou commandé par le procédé d'apprentissage choisi, dans l'étape d), de manière à ce que les paramètres appris dans l'étape b) soient utilisés au début de la régulation et/ou commande, paramètres dont l'apprentissage se poursuit pendant la régulation et/ou commande à l'aide des nouveaux états ($x_t$) et nouvelles actions ($a_t$) résultant de la régulation et/ou commande.

**4.** Procédé selon l'une des revendications 1 à 3, dans lequel les paramètres appris avec le procédé d'apprentissage et/ou d'optimisation dans l'étape b) sont réinitialisés dans l'étape d) et font l'objet d'un nouvel apprentissage lors de la régulation et/ou commande du système technique.

5. Procédé selon l'une des revendications précédentes, dans lequel le modèle de simulation utilisé est élaboré dans l'étape a) sur la base d'un réseau neuronal récurrent.

6. Procédé selon l'une de revendications précédentes, dans laquelle l'évaluation est une mesure de la qualité du procédé d'apprentissage et/ou d'optimisation en rapport avec une fonction d'évaluation ou de récompense.

7. Procédé selon l'une des revendications précédentes, dans lequel la pluralité des procédés d'apprentissage et/ou d'optimisation appliqués au modèle de simulation comprend un ou plusieurs procédé/s d'apprentissage par renforcement, notamment des procédés d'apprentissage par renforcement basés sur des tables.

8. Procédé selon l'une des revendications précédentes, dans lequel la pluralité des procédés d'apprentissage et/ou d'optimisation appliqués au modèle de simulation comprend un algorithme de critique heuristique adaptatif et/ou un algorithme Q-learning et/ou un algorithme de balayage à priorité.

9. Procédé selon la revendication 7 ou selon les revendications 7 et 8, dans lequel le procédé d'apprentissage par renforcement ou un des procédés d'apprentissage par renforcement est configuré de manière à ce que :

   - le comportement dynamique du système technique soit modélisé à plusieurs instants (t) par un réseau neuronal récurrent à l'aide de données d'apprentissage comprenant des états ($x_t$) et des actions ($a_t$) déterminés par le modèle de simulation, le réseau neuronal récurrent étant formé par au moins une couche d'entrée (I) comprenant les états ($x_t$) du système technique et les actions ($a_t$) exécutées sur le système technique aux multiples instants (t), au moins une couche cachée récurrente (H) comprenant des états cachés ($s_t$, $p_t$) et au moins une couche de sortie (0) comprenant les états ($x_t$) du système technique aux multiples instants (t) ;
   - une règle de choix d'action soit apprise en couplant le réseau neuronal récurrent, pour un instant présent et des instants futurs (t), à un autre réseau neuronal comprenant au moins une couche d'entrée (H), au moins une couche cachée (R) comprenant des états cachés ($r_t$) et au moins une couche de sortie (O'), la couche d'entrée (H) de l'autre réseau neuronal comprenant, à un instant donné (t), au moins une partie des états cachés ($p_t$) du réseau neuronal récurrent à l'instant donné (t) et la couche de sortie (O') de l'autre réseau neuronal comprenant, à l'instant donné, l'action ($a_t$) exécutée sur le système technique à l'instant donné ;
   - les états ($x_t$) du système technique et les actions associées ($a_t$) soient déterminés par le réseau neuronal récurrent couplé à l'autre réseau neuronal à l'aide de la règle de choix d'action apprise.

10. Procédé selon l'une des revendications précédentes, dans lequel un état respectif ($x_t$) du système technique est **caractérisé par** une pluralité de variables d'état dans un premier espace d'état ayant une première dimension et/ou une action respective ($a_t$) associée à un état ($x_t$) est **caractérisée par** une pluralité de variables d'action.

11. Procédé selon l'une des revendications précédentes, dans lequel une action respective ($a_t$) associée à un état ($x_t$) est **caractérisée par** la modification d'une ou de plusieurs grandeur/s de réglage du système technique, au moins une partie des grandeurs de réglage correspondant, de préférence, à des états ($x_t$) du système technique.

12. Procédé selon la revendication 10 ou selon les revendications 10 et 11, dans lequel

   - une minimisation du premier espace d'état étant exécutée à chaque fois avant l'exécution de l'étape b) pour au moins une partie des procédés d'apprentissage et/ou d'optimisation appartenant à la pluralité des procédés d'apprentissage et/ou d'optimisation, de la manière suivante :

      les états ($x_t$) du premier espace d'état sont modélisés par un réseau neuronal récurrent comprenant une couche d'entrée (I), une couche cachée récurrente (H) et une couche de sortie (0), à l'aide d'états déterminés avec le modèle de simulation en tant que données d'apprentissage, :

         i) la couche d'entrée (I) et la couche de sortie (0) étant formées à chaque fois par les états ($x_t$) dans le premier espace d'état pour les multiples instants (t) ;
         ii) la couche cachée récurrente (H) étant formée par des états cachés ($s_t$) avec une pluralité de variables d'état cachées dans un second espace d'état ayant une seconde dimension, la seconde dimension étant inférieure à la première dimension ;

- les procédés d'apprentissage et/ou d'optimisation respectifs de la au moins une partie des procédés d'apprentissage et/ou d'optimisation selon l'étape b) étant exécutés sur les états cachés ($s_t$) dans le second espace d'état.

13. Procédé selon l'une des revendications précédentes, dans lequel, dans l'étape b), les états ($x_t$) et/ou actions ($a_t$) sont discrétisés en fonction de critères prédéterminés.

14. Procédé selon l'une des revendications précédentes, dans lequel un ou plusieurs domaine/s de valeurs est/sont fixé/s ou appris pour les états ($x_t$) et/ou les actions associées ($a_t$) du système technique, domaine/s à l'intérieur duquel/desquels les valeurs des états ($x_t$) et/ou actions ($a_t$) lors de l'application des procédés d'apprentissage et/ou d'optimisation dans l'étape b) doivent être comprises.

15. Procédé selon la revendication 14, dans lequel les domaines de valeurs sont appris grâce à un signal de punition lors de l'application du procédé d'apprentissage et/ou d'optimisation respectif au modèle de simulation dans l'étape b), un signal de punition étant d'autant plus grand que l'écart entre les états ($x_t$) et/ou actions ($a_t$) déterminés avec le procédé d'apprentissage et/ou d'optimisation et des états ($x_t$) et/ou actions ($a_t$) mesurés ou autorisés est grand.

16. Procédé selon l'une des revendications précédentes, dans lequel une turbine à gaz est régulée et/ou commandée grâce au procédé, les états du système technique et/ou les actions ($a_t$) associées aux états ($x_t$) comprenant une ou plusieurs des grandeurs suivantes : puissance totale de la turbine à gaz ; une ou plusieurs pression/s et/ou température/s dans la turbine à gaz ou dans son environnement ; les accélérations dans la chambre de combustion de la turbine à gaz ; un ou plusieurs paramètre/s de réglage de la turbine à gaz, notamment les réglages des soupapes et/ou les proportions de carburant et/ou les aubes directrices d'entrée.

17. Procédé selon la revendication 16, dans lequel la pluralité de procédés d'apprentissage et/ou d'optimisation qui sont appliqués au modèle de simulation dans l'étape b) comprennent comme but de l'apprentissage et/ou de l'optimisation des accélérations plus faibles dans la chambre de combustion.

18. Produit programme d'ordinateur comprenant un code de programme enregistré sur un support lisible par une machine pour l'exécution du procédé selon l'une des revendications précédentes lorsque le programme est exécuté sur un ordinateur.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1016981 A1
- US 5485545 A

**In der Beschreibung aufgeführte Nicht-Patentliteratur**

- Learning internal representations by error propagation. **D.E. Rumelhart ; G.E. Hinton ; R.J. Williams et al.** Parallel Distributed Processing: Explorations in The Microstructure of Cognition. MIT Press, 1986, vol. 1, 318-362

- **Leslie Pack Kaelbling ; Michael L. Littman ; Andrew W. Moore.** Reinforcement Learning: A Survey. *Journal of Artificial Intelligence Research,* 1996, vol. 4, 237-285